# EUROPEAN PATENT SPECIFICATION

(11) **EP 0 283 109 B1**
(45) Date of publication and mention of the grant of the patent: **01.06.1994**
(21) Application number: 88300379.0
(22) Date of filing: 18.01.1988
(51) Int. Cl.: H02P 1/42

(54) **Starter for single-phase induction motors**
Anlasser für Einphasen-Induktionsmotoren
Démarreur pour moteurs monophasés à induction

(30) Priority: 16.01.1987 GB 8701036
(43) Date of publication of application: 21.09.1988
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- DE-A- 1 938 260
- DE-A- 2 621 735
- US-A- 1 871 455
- US-A- 2 028 230
- US-A- 4 012 678

## Description

This invention relates to single phase induction motor apparatus, and primarily to circuitry for starting an induction motor.

U.S. 4,012,678 discloses a circuit for starting and running a single phase A.C. induction motor having a main field winding and a start field winding. A switch is operable to switch between a high-torque starting mode, and a high efficiency running mode. The windings are connected in parallel, and a double throw switch in series with the start field winding switches between a start impedance and a run capacitor. This arrangement prevents sparking between the switch contacts. Inductive phase splitting is not used.

Single phase induction motors are used widely in driving grinding wheels, drilling machines, pumps, household electrical appliances and small size industrial machinery. Phase splitting is needed with a single phase power supply to produce a rotary magnetic field. A motor is usually started by capacitor phase splitting (including cut-off or permanent drive or partial capacity drive after starting), conductor phase splitting (including cut-off or permanent drive after starting), or resistor phase splitting (including cut-off or permanent drive after starting).

There are advantages and disadvantages, different performances and different manufacturing costs in said methods. A single phase induction motor according to the invention is defined in appendant claim 1.

Preferably the phase-shifting impedance includes a lamp.

In another embodiment, the switch is an on-off switch connected across the phase-shifting impedance, and is closed during starting and open during running.

In another embodiment, the switch is a two-way switch and is arranged to connect an impedance comprising an auxiliary winding (WS2) with the same polarity as the starting winding in series with the starting winding during running.

Preferably the phase-shifting impedance (C1) is in series with the auxiliary winding.

Another embodiment involves the parallel connection of phase splitting and current limiting components such as resistors or conductors with a normally open starting switch or a normally closed eccentric (centrifugally operated) switch. These are serially connected with the starting winding. In this way, the phase splitting current limiting components are shorted or disconnected by the operation of the switch and serially connected with the starting winding to be continuously powered so that it contributes to the torque of the motor after the starting phase.

A resistance lamp may be used instead of a resistor as the transient phase splitting current limiting or permanent phase splitting current limiting component for the starting phase to reduce heat build-up and to provide lighting. The resulting light is used synchronously with the operation of the motor, such as a grinding wheel. Further overload protection may be provided for the initiating transient changing-over switches. The eccentric switch and current drive switch may be made to have dual functions.

The design is aimed at providing a new operating method with the option of varied types of load, to connect the phase shift impedance components, such as, resistor, conductor, capacitor, in parallel with the starting switches such as a centrifugal switch or current sensing switch. This applies electric energy to the starting winding serially connected to the above components continuously after the motor is started by phase splitting. The design has the same starting characteristic and method of induction phase splitting, but the operating performance may be improved due to the continuous contribution of the starting winding to the motor.

In addition, further improvements in the design include the replacement of the conventional resistor with a resistance lamp to be used as indicator of motor operation after the starting phase, or to meet the requirement of the load while the motor and the lamp operate synchronously so, for example, a grinding wheel may be illuminated. The resistance lamp is used both in phase splitting and in direct operation. The heat dissipation of a resistance lamp is less than that of a pure resistor as the lamp turns the electrical energy into heat and light.

The laminated contact point springs of the centrifugal switch are replaced with heat sensitive bimetallic sheets. As well as it being used as eccentric blocking, it is also used to be a heat sensitive cut-off on overload, or to activate the initiating current drive switch to provide its dual functions of heat sensitive switch and magnetic switch. This cuts off the circuit after the starting phase or on overload to protect the conventional phase splitting starting single phase induction motor.

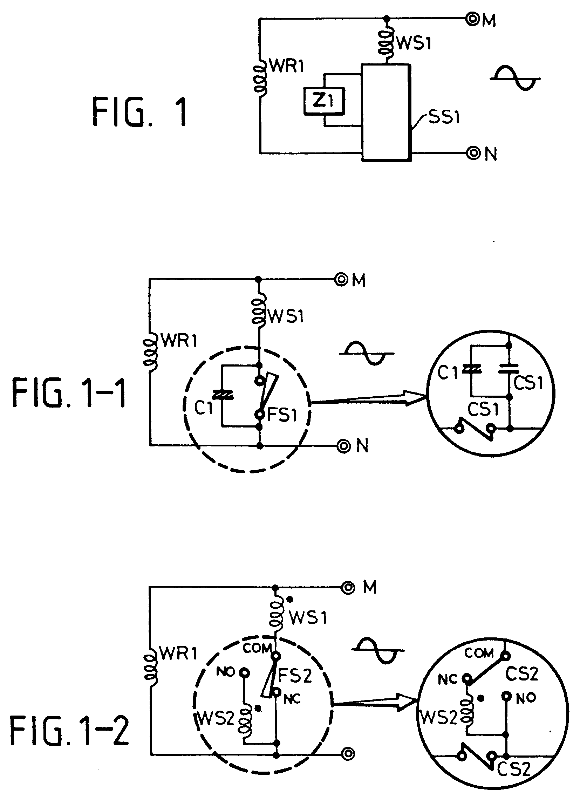

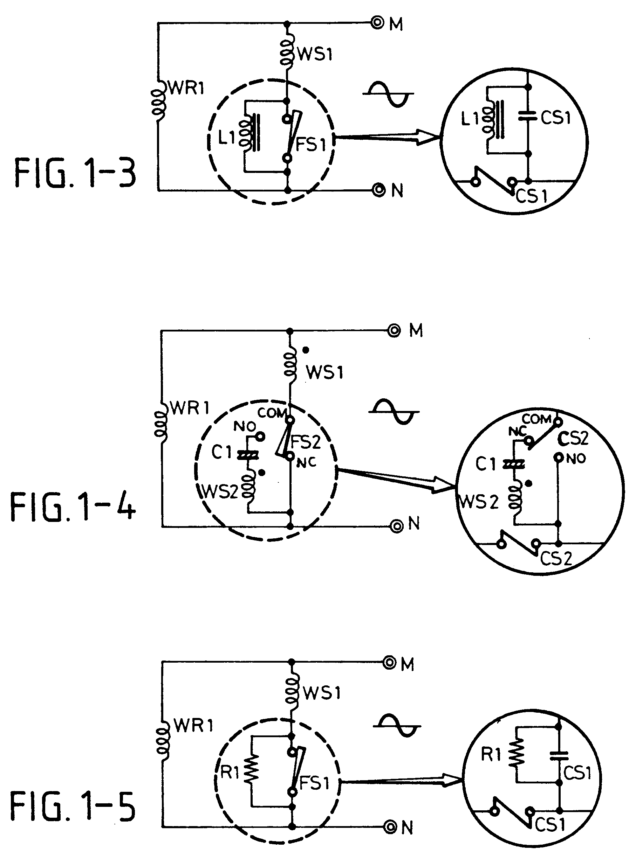

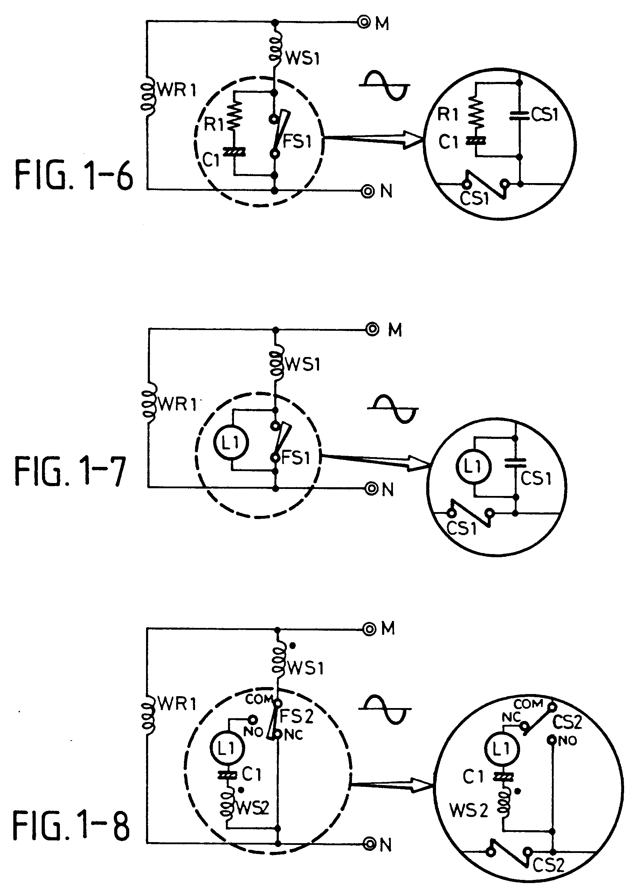

The invention will now be described, by way of example, with reference to the drawings, in which:-
Fig. 1 is a block diagram of the principle;
Fig. 1-1 an example of the parallel connection of a phase splitting current limiting capacitor to a transiently operating starting switch;
Fig.1-2 is an example of the parallel connection of a second starting winding of the phase splitting current limiting with the two ends of the contact point of the starting transient switch;
Fig.1-3 is the example to connect parallelly the phase splitting current limiting conductor with the two ends of the contact point of the starting transient switch;
Fig.1-4 is the example to connect parallelly the phase splitting current limiting capacitor and the second starting winding with the two ends of the contact point of the starting transient switch;
Fig. 1-5 is the example to connect parallelly the phase splitting current limiting resistor with the two ends of the contact point of the starting transient switch;
Fig.1-6 is the example to connect parallelly the phase splitting current limiting resistor and capacitor with the two ends of the contact point of the starting transient switch.
Fig.1-7 is the example to replace the phase splitting current limiting resistor shown in Fig.1-5 with a resistance lamp;
Fig.1-8 is the example to connect parallelly the phase splitting current limiting resistor, capacitor and the second starting winding with the two ends of the contact point of the starting transient switch;
Fig. 2 is the example of the eccentric switch with the starting winding cut-off, sensitive to heat build-up, using bimetallic sheets;
Fig. 2-1 is the example of the eccentric switch with the starting winding overload and running winding overload heat accumulating cut-off function bimetallic sheets;
Fig. 2-2 is the example of the eccentric switch with main circuit heat drive protection contact point;
Fig. 3 is the example of the starting current driven switch with starting winding overloading heat accumulating cut-off function bimetallic sheets;
Fig. 3-1 is the example of the starting current driving switch with the starting winding overload and running winding overload heat accumulating cut-off function;
Fig. 3-2 is the example of the starting current driving relay with the main circuit heat drive protection contact point.

A conventional single phase AC induction motor is unable to produce a rotary magnetic field from a single phase power supply. Generally, the function of the rotary magnetic field is to start the motor by means of driving and starting windings. This is done by phase splitting using a resistor, conductor or capacitor. The performance and costs are different for each different method. A user of a conventional method may select the following:
1. Capacitor phase splitting and permanent drive; the driving torque of this method is medium, operation well, medium costs.
2. Capacitor phase splitting, partial capacitor permanent driving; the driving torque of this method is powerful, operating well, costs high.
3. To operate the starting transient switch (including eccentric switch or current acting switch) to cut off the starting coil after the motor is started by capacitor phase splitting; the starting torque of this method is powerful, operating medium, costs medium.
4. Induction phase splitting permanent driving; the starting torque of this method is small, operating well, costs high.
5. To cut off the starting coil by operating transient switch after the starting of induction of phase splitting; the starting force of this method is powerful, operating medium, costs low.
6. Resistor phase splitting permanent driving the initiating force of this method is medium, operating well, costs high.
7. To cut off the starting coil by operating the transient switch after the initiation of resistor phase splitting the starting torque of this method is medium, operating efficiency medium, costs high.
8. Cathode motor the starting torque of this method is low, costs low.

Among the above designs we discover that those of 1, 4,6 and 8 are generally used with smaller power motors and those of 2,3,5 and 7 are used with medium and high powered motors. It is not possible to use any of the above methods if one wants to obtain a starting torque as powerful as that of 5 and where the starting coil may drive permanently to attain the higher operating efficiency like those of 1,4 and 5.

The design is aimed to meet the above requirements. The invention has an induction phase splitting starting winding for applying a powerful starting moment to a motor connected in series with a starting transient switch. The switch may be a centrifugal switch which is always closed while the motor is stationary and remains closed until the motor reaches approximately 70% of its operating speed. Alternatively, the switch is a starting current drive (current serving) switch of the starting winding. It is always open on blocking. The switch is connected in parallel with capacitors, conductors, resistor, or resistance lamp current limiting phase splitter. This is serially connected to the starting coil while the switch is switched off after the starting phase. This makes the starting coil convert to the state of permanent running. Figures 1 to 1-10 are examples based on this principle.

Referring to Figure 1, apparatus in accordance with the invention has transient induction phase splitting starting winding WS1 which is serially connected with, and controlled by, a starting switch SS1. The winding WS1 and switch SS1 are together connected in parallel with a driving winding WR1. A phase splitting current limiting component Z1 is connected in parallel across the switch SS1 in order that the starting winding is constantly powered, and therefore, contributing to the torque of the apparatus. In that situation the component Z1 is serially connected to the starting winding WS1.

Fig. 1-1 shows use of a current limiting phase splitting capacitor C1 based on the principle of Figure 1. The current limiting phase splitting component is connected in parallel with an eccentric switch FS1 as the starting switch or the two terminals of a starting current drive switch. The transient starting switch is connected in series with the starting winding WS1. These are then connected in parallel with a power supply. When the motor is passing current, the current limiting phase splitting capacitor C1 connected in parallel is shorted due to the eccentric switch FS1 or the starting current drive switch being closed. The motor has the induction phase splitting starting characteristic of a larger starting force at this time. When starting is completed, the switch FS1 or CS1 is serially connected with the current limiting and phase splitting capacitor and the starting winding WS1 contribute to the driving force so that the output power of this new design is larger than that of the conventional device.

Fig. 1-1 shows the parallel connection of a second starting winding WS2 wound in same polarity as the first starting winding WS1 and based on the principle of Figure 1. The eccentric switch has two positions NO (normally open) and NC (normally closed). Alternatively, the NC and NO positions are switched by a starting current drive switch CS2 (which is a current dependent switch driven by a current sensing coil in series with the driving winding WR1 and arranged to open the switch only during the high current starting phase). When the motor is passing current, due to the switch being in a closed position connecting a common connection COM to the NC position of FS2, the second starting winding WS2 is shorted and not connected to the circuit. The motor is in the state of induction phase splitting starting with a larger starting torque at this time. When starting is completed, the switch FS2 is switched to an open position to connect the common position COM to the normally open position NO. If switch CS2 is used, then it switches to the NC position. This switching means that the first starting winding WS1 and second starting winding WS2 are serially connected in the same polarity, thereby driving continuously to increase the output power of the motor.

Figure 1-3 shows the use of a current phase splitting inductor L1 as the component of current limiting and phase splitting based on the principle of Figure 1. It is connected in parallel with the eccentric switch or with the starting current drive switch. The starting transient switch is serially connected to the starting winding. These are connected in parallel with the power supply. During starting, L1 is shorted by the switch FS1 or CS1, and the motor is in the state of inductive starting with larger starting torque. When starting is completed, FS1 or CS1 is open, and L1 is serially connected with the starting winding WS1 to cause WS1 to contribute to the power of the device.

Figure 1-4 shows the invention based on the principle shown in Figure 1. The phase splitting current limiting component constituted by a capacitor C1 and a common polarity second starting winding WS2 are connected in parallel to the eccentric switch FS2 of the starting transient switch. It has a normally open position NO, and a normally closed position NC and a common contact point COM. The starting current drive switch CS2 also has NO and NC positions. One end of the starting coil WS1 is connected to power supply M, and the other end is connected to the common contact point COM of the above FS2 and CS2. The power supply N is connected to the other side of the switch FS2 or CS2. On starting, due to the switch FS2 being in the NC position, or the switch CS2 being in the NO position, the current limiting phase splitting component constituted by the second starting winding WS2 and the capacitor C1 is shorted or not connected to the circuit. The motor is in the state of induction phase splitting starting with a larger starting force. When the starting is completed, the switch FS2 is switched to be in its NO position and CS2 is switched to its NC position. The capacitor C1 and the second starting winding WS2 become serially connected with starting winding SW1 and they contribute additional power to the motor.

Figure 1-5 shows an embodiment based on the principle of Figure 1. A current limiting phase splitting component R1 constituted by resistor R1 is connected in parallel with the eccentric switch FS1, which acts as a starting transient switch or an initiating current driving switch CS1. The transient starting switch and the starting winding are serially connected and together connected across a power supply. While the motor is starting, FS1 and CS1 are closed. WS1 and WR1 become the induction phase splitting with larger starting force. Once the motor is running starting is complete and FS1 and CS1 are opened. The initiating winding WS1 and current limiting phase splitting resistor R1 then become serially connected and contribute to the output power of the motor.

Figure 1-6 shows an embodiment of the invention according to the principle of Figure 1. The current limiting phase splitting components, resistor R1 and capacitor C1 are connected in parallel with the eccentric switch FS1 which is to be used as a transient starting switch, or with the starting current drive switch CS1; the transient starting switch and the starting winding are serially connected and together connected across the power supply. When the motor is started, FS1 and CS1 are closed. WS1 and WR1 are combined so that the induction phase splitting results in a larger starting force. When the starting is complete and the motor is operating in its running mode, FS1 and CS1 are switched open, and the starting winding WS1 and the current limiting phase splitting resistor R1 and capacitor C1 are serially connected thus contributing to the power of the running motor.

Figure 1-7 shows an example where the resistor in Figure 1-5 is replaced with a resistance lamp L1 to be used as a current limiting phase splitting component based on the principle of Figure 1. The lamp L1 turns the electric energy into light and heat instead of only the heat of a pure resistor. The temperature of the former is lower, and it may also indicate with light whether the starting is complete. It is useful to have a lamp operating with the machine, such as a grinding wheel. This requires light at the point of operation of a machine such as a grinding or drilling machine.

Figure 1-8 shows an embodiment based on the principle of Figure 1. A resistance lamp and a capacitor are serially connected to the second starting winding to make the example shown in Figure 1-4 but having a synchronizing lamp.

In addition, either in the above examples or in conventional phase splitting initiating circuits, the above eccentric switch and starting current drive switch are components with a high rate of trouble due to frequent starting. In view of this defect, the following shows the use of bimetallic sheet springs replacing the spring sheets of the eccentric switch or the contact point of spring sheets of the start current drive switch. Instead of the above eccentric switch being operable by centrifugal force, the start current drive switch may be driven by starting current. The starting winding overload heating is enough to operate the bimetallic sheets, so that the metal sheets are operated by the internal heating of the starting winding and the running winding overload motor. The bimetallic sheets are connected in series with the power supply. The metal sheets will bend to cause a short circuit.

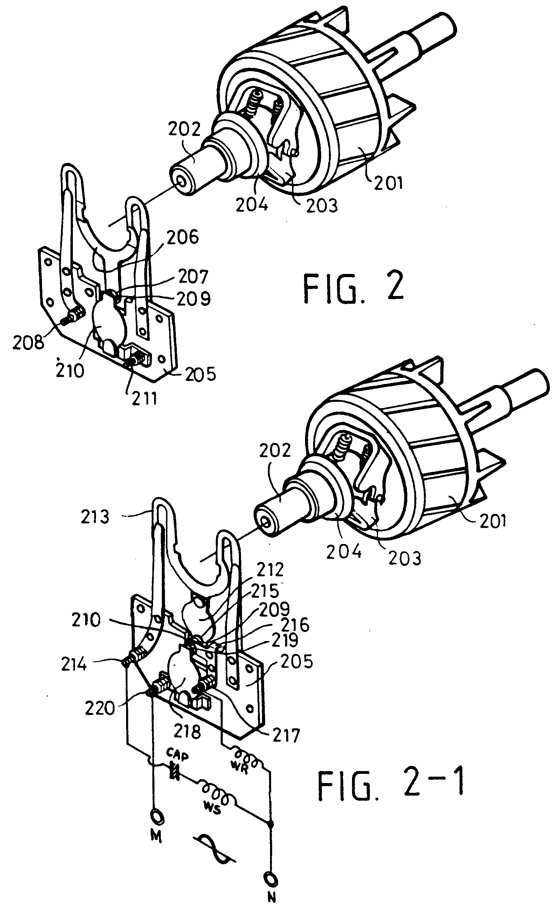

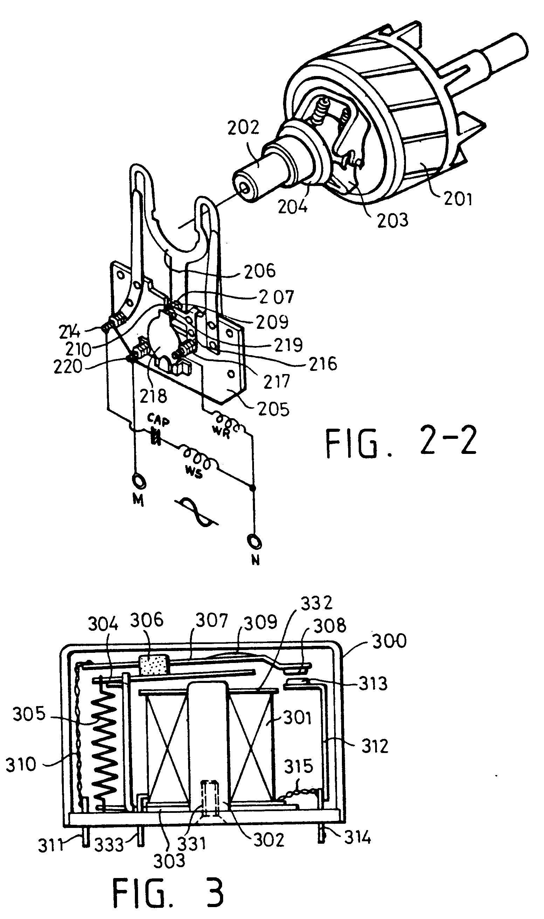

In Figure 2, there are:
Rotor 201, conventional eccentric organ 203 and circular insulating thrust block 204 are set on the rotor shaft 202 to force contact point 207 of the spring sheet 206 to connect with the fixed contact point 209 while stationary. Once normal running is achieved, the eccentric organ moves outwardly, thereby pulling the circular insulating thrust block 204 back from the contact point 209. The two contact points, 207 and 209 are separated by the resilience of the spring sheet 206;

The connecting leg 208 on the insulating board 205 is used to connect with the spring sheet. The bimetallic sheet 210 between the connecting leg 211 and fixed contact point that would spring in the direction of cut-off are used to make the two points separate in case the overload heat accumulating occurs during the starting phase.

The above structure would cut off the easily damaged starting winding if overload occurred, the speed of the motor would decrease and the eccentric switch would close up for a long time. The motor running winding will be protected by the protecting component of the circuit itself to improve the condition that the circuit protecting component is unable to meet the requirement of individual overload other than short. The eccentric switch of this design has the function of separating the contacts when the temperature of the switch becomes too high, thereby protecting the weaker starting winding.

Figure 2-1 shows the design having two sets of heat drivable contacts usable to protect the start winding and to protect the whole motor from overload.

Figure 2-1 shows a rotor 201, a conventional eccentric organ 203 and circular insulating thrust block 204 set on a rotor shaft 202. A spring sheet 213 is resiliently biassed to keep a contact 215 and fixed contact 209 apart. The rotor shaft forces the spring sheet to connect the contacts. Once the starting phase is complete the circular insulating thrust block is pulled back by the eccentric organ moving to its extended position, and the two contacts 209 and 215 are separated by the resilience of the spring sheet 213, or in case heat accumulates in the start winding due to overload, the bimetallic sheets 212 deform to cut it off.

The spring sheets set 213 is biassed to separate the contacts and is operated by the eccentric organ and circular insulating thrust block so that the contacts will separate on the completion of the starting phase. The section of it adjacent to the contact point includes heat sensitive bimetallic sheets 215 which when heated, become biassed against connection. The connecting leg 214 of the spring sheets set 213 is connected to the starting winding. The heat sensitive bimetallic sheet set 218 biassed against connection is connected to the connecting leg 220 of the power supply to be connected to power supply M. The other ends of the start winding and running winding are to be connected jointly to the N end of the power supply.

The above protective organ provides protection for the start winding and running winding. In addition, if overload occurs due to heat accumulation in the motor, it is protected by the heat-sensitive bimetallic sheet set 218 on the side of power supply.

Figure 2-1 shows an example to provide protection against overload only where the main feature is to remove the bimetallic sheets 212 between the spring sheet 213 and contact point 215. They are replaced directly by the spring sheets set 206 which has no bimetallic sheets. The eccentric cut-off contact points 209 and 210, and the overload bimetallic sheet 218 are serially connected to power supply and the permanent closing contact points set 219 and 210 are operated by it to separate and cut off the power supply during overload or excessive heat accumulation.

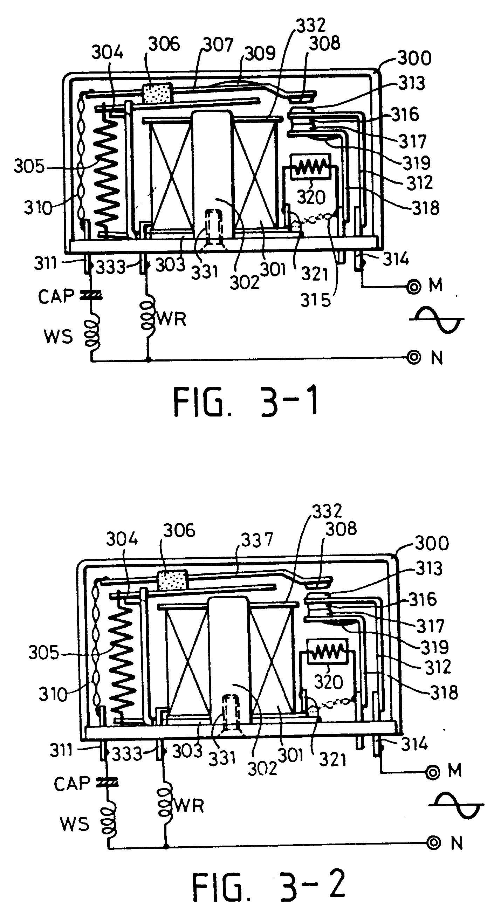

As a rule, in respect of the adoption of a starting transient switch, the starting current drive switch is used to replace the eccentric switch to cut off the power supply of the start winding after the starting phase. So the above starting component with the function of heat protection is able to provide further protection via the starting current drive relay with heat protection. Figure 3 shows an example of the starting current drive switch with heat protection proving the same protective function as that shown in Figure 2. It has a conventional shell 300, a magnetic core 302 fixed to the bottom of the shell by screw 331, the magnetic core is inserted into the insulating sleeve 332 in order to be wound with current coil 301 to produce the attracting function. The L type magnetic path iron laminates 303 provide the magnetic path and structure, a motive magnetic inductive attractive laminate 304 is placed on it and a magnetic force is preset between the motive magnetic induction attractive laminate 304 and the L type iron laminate 303 by spring 305. The important features of the action of attracting and spring off formed by above structure are:
an insulating block 306 on the motive magnetic induction attractive laminate, one end of which is connected to outgoing leg 311 to be connected to the motive induction spring sheet 307 of the start winding; a heat driven bimetallic sheet 309 with biassing against the closing of the contacts between the motive induction spring sheet 307 and the contact point 308. The contact point 308 is connected to another fixed contact point 313 which is normally open and the fixed contact point 313 is extended to outgoing leg 314 by fixed induction 312 to be connected to the M end of the power supply and connected to one end of the current coil 301 via wire;
the other end of the current coil 301 is connected to another outgoing leg 333 leading to the running winding;
the common end of the start winding and running winding is connected to the N end of power supply.

The above starting power supply drive switch with heat driving protection would provide the weaker start winding with protection as in the example shown in Figure 2.

Figure 3-1 shows an example of the starting power supply drive switch with the heat driving protection providing the start winding and the main circuit with the function of protection in the same way as that shown in Figure 2-1. In the Figure, in addition to those features shown in Figure 3, it also shows the lower end of the fixed induction laminate 312 connected to the outgoing leg 314 leading to the power supply M. There is an upper contact point 313 and a lower contact point 316 at the top end of the first laminate 312, and the upper contact point 313 leads to a normally open contact point 308 as shown in Figure 3-1; a heat operable bimetallic sheet 319, biassed against contact is serially connected to the top end of the second fixed induction laminate 318, and the contact point 317 on the end of the bimetallic sheets 319 is normally closed and leads to the lower contact point 316 of the first fixed induction laminate 312 mentioned above and cut-off the circuit while the bimetallic sheets 319 separates the contacts as a result of increased temperature due to overload;
the current coil and the second fixed induction laminate may be connected directly with wire 315, or connect a resistor 320 serially to the current coil 301 to produce heat based on the current of the load. One end of the resistor 320 is connected to the current coil and the other end is connected to the fixed induction laminate 318 to make the bimetallic sheets 319 function on overload via the heating of the resistor, thereby protecting the single phase motor with smaller horse power. The rest of its structure is the same as that shown in Figure 3.

Figure 3-2 shows an example to provide the function of overload protection only. The main characteristic is to remove the induction spring laminate 307 and the bimetallic sheets between the contact points in Figure 3-1, and extended the induction spring laminate 337 to the contact point 308. This method would provide overload protection to the motor only, and no protection is given to the starting winding.

In summary, the design is aimed to reduce the defects of being operated solely by the running winding of the conventional induction phase splitting starting single phase induction motor with the starting switch to connect in parallel the starting closing contact point of the single phase splitting induction motor and the components of the resistor, conductor, capacitor or resistance lamp or the second start winding. Although there is also the permanently driving capacitor in the conventional method, the starting turning moment is small and there is even the method of cutting off partial starting capacity and the rest of the capacity runs permanently after starting but the costs are rather high. This design is intended to make the induction phase splitting motor have a low cost and large turning moment to provide the starting transient switch components with heat driving protection to protect the motor included in this design or the conventional single phase induction motor requiring the starting transient switch in application. A low cost design of the protection of the installation of motor is also included, the contribution of the design to household electrical appliances or small size electric motors is very clear.

Thus, conventional AC induction motor apparatus have the following features:-
It has a running winding and a starting winding of split phase by means of an inductor, capacitor or resistor.

The starting winding has an electrical connection when the motor is running and disruption after starting. The disruption after starting may be achieved by means of a centrifugal switch which closes at instant of starting, and opens after the motor reaches high speed (such as for the use of pump, sand wheeler and drill), or by means of a starting switch with the current coils to drive the contacts. The contacts of the switch closing due to the larger current passing through the current coils at the instant of starting, and open after the starting, the running speed becomes normal and the current reduces.

The centrifugal type starting switch and current coil type starting switch are almost in series with the starting coils and the split phase elements (normally a capacitor and resistor). Therefore, after the starting, the starting coils and the split phase elements are all interrupted. Another type is a switch designed to have tow sets of capacitors, by which at the two ends of the starting switch in series with the starting capacitor C1 are in parallel with the running capacitor C2 to cause C1+C2 to produce the split phase during the starting, and C1 alone is in series with the starting winding during running of the motor.

In apparatus in accordance with the invention there is only a running capacitor in parallel with the contacts of the starting switch (to show or connection lines). When the motor starts, the contacts of the starting switch are in the closed state. At that time, the motor has inductive split phase, giving high starting torque. At normal speeds the contacts of the starting capacitor serve as the capacitive split phase for normal or continuous running.

The expensive starting capacitor of the conventional apparatus may thus be dispensed with. The motor has the advantages of low noise and high efficiency in the capacitive split phase for permanent running, and has the capacitor to absorb sparks emitted from the contacts.

## Claims

1. A single-phase induction motor comprising a running winding (WR1), a phase-splitting starting winding (WS1), a phase-shifting impedance and a switch, the switch being either a centrifugal switch or being controlled by load current, characterized in that during starting the switch connects the phase-splitting starting winding directly across the power supply, and during running the switch causes the phase-splitting starting winding to be connected in series with the phase-shifting impedance.

2. A single-phase induction motor according to claim 1 in which the phase-shifting impedance includes a lamp bulb.

3. A single-phase induction motor according to claim 1 or claim 2 in which the switch is an on-off switch connected across the phase-shifting impedance, and is closed during starting and open during running.

4. A single-phase induction motor according to claim 1 or claim 2 in which the switch is a two-way switch and is arranged to connect an impedance comprising an auxiliary winding (WS2) with the same polarity as the starting winding in series with the starting winding during running.

5. A single-phase induction motor according to claim 4 having a phase-shifting impedance (C1) in series with the auxiliary winding.

## Patentansprüche

1. Einphasen-Induktionsmotor, welcher eine Laufwicklung (WR1), eine phasenteilende Anlaßwicklung (WS1), eine Phasenschiebeimpedanz und einen Schalter aufweist, wobei der Schalter entweder ein Zentrifugalschalter oder ein durch einen Verbraucherstrom gesteuerter Schalter ist, dadurch gekennzeichnet, daß während des Anlassens der Schalter die phasenteilende Anlaßwicklung direkt an die Energieversorgung schaltet und während des Laufzustandes der Schalter bewirkt, daß die phasenteilende Anlaßwicklung in Serie mit der Phasenschiebe-Impedanz geschaltet wird.

2. Einphasen-Induktionsmotor nach Anspruch 1, bei dem die Phasenschiebe-Impedanz eine Lampenbirne umfaßt.

3. Einphasen-Induktionsmotor nach Anspruch 1 oder Anspruch 2, bei dem der Schalter ein Ein/Aus-Schalter ist, welcher an die Phasenschiebe-Impedanz geschaltet ist und während des Anlassens geschlossen und während des Laufzustandes offen ist.

4. Einphasen-Induktionsmotor nach Anspruch 1 oder Anspruch 2, bei dem der Schalter ein Zweiweg-Schalter ist und derart angeordnet ist, daß er eine Impedanz, welche eine Hilfswicklung (WS2) mit der gleichen Polarität wie die Anlaßwicklung aufweist, in Serie mit der Anlaßwicklung während des Laufzustandes geschaltet wird.

5. Einphasen-Induktionsmotor nach Anspruch 4, welcher eine Phasenschiebe-Impedanz (C1) hat, die in Serie mit der Hilfswicklung geschaltet ist.

## Revendications

1. Moteur monophasé à induction comprenant un enroulement de marche (WR1), un enroulement de déphasage pour le démarrage (WS1), une impédance de déphasage et un interrupteur, celui-ci étant soit un interrupteur centrifuge, soit commandé par le courant de charge, caractérisé en ce que lors du démarrage, l'interrupteur met l'enroulement de déphasage pour le démarrage directement dans le circuit d'alimentation, et en ce qu'en cours de marche, l'interrupteur provoque la connection en série de l'impédance de déphasage avec l'enroulement de déphasage pour le démarrage.

2. Moteur monophasé à induction selon la revendication 1, caractérisé en ce que l'impédance de déphasage comprend une ampoule.

3. Moteur monophasé à induction selon l'une quelconque des revendications 1 ou 2, caractérisé en ce que l'interrupteur est du type marche-arrêt connecté par l'impédance de déphasage, et en ce qu'il est éteint lors du démarrage et allumé en cours de marche.

4. Moteur monophasé à induction selon l'une quelconque des revendications 1 ou 2, caractérisé en ce que l'interrupteur est du type va-et-vient et est conçu de façon à relier en cours de marche une impédance comprenant un enroulement auxiliaire (WS2) ayant la même polarité que l'enroulement de démarrage en série avec l'enroulement de démarrage.

5. Moteur monophasé à induction selon la revendication 4, caractérisé en ce qu'il présente une impédance de déphasage (C1) placée en série avec l'enroulement auxiliaire.
